# EUROPÄISCHE PATENTSCHRIFT

(11) **EP 0 679 214 B1**
(45) Veröffentlichungstag und Bekanntmachung des Hinweises auf die Patenterteilung: **25.02.1998**
(21) Anmeldenummer: 95900607.3
(22) Anmeldetag: 09.11.1994
(51) Int. Cl.: E05F 15/16

(54) **ANTRIEBSEINRICHTUNG FÜR EINEN HIN- UND HERGEHEND ANZUTREIBENDEN GEGENSTAND, INSBESONDERE TORBLATT**
DRIVE DEVICE FOR AN OBJECT TO BE DRIVEN BACK AND FORTH, IN PARTICULAR A GATE SECTION
SYSTEME D'ENTRAINEMENT POUR UN OBJET A DEPLACER EN VA-ET-VIENT, NOTAMMENT UNE PARTIE DE PORTE

(30) Priorität: 09.11.1993 DE 4338219
(43) Veröffentlichungstag der Anmeldung: 02.11.1995
(73) Patentinhaber: MARANTEC ANTRIEBS- UND STEUERUNGSTECHNIK GMBH & CO. PRODUKTIONS KG, D-33428 Marienfeld (DE)
(72) Erfinder: HÖRMANN, Michael, D-33428 Marienfeld (DE)
(74) Vertreter: Flügel, Otto, Dipl.-Ing.
(86) Internationale Anmeldenummer: DE9401313
(87) Internationale Veröffentlichungsnummer: WO9513446

(56) Entgegenhaltungen:
- DE-A- 3 837 149
- GB-A- 1 188 672

## Beschreibung

Die Erfindung betrifft eine Antriebseinrichtung für einen über eine, vorzugsweise geradlinig verlaufende, Wegstrecke entlang einer Führungsschiene hin- und hergehend bewegt antreibbaren Mitnehmerschlitten oder dergleichen, der an einem hin- und hergehend anzutreibenden Gegenstand, insbesondere Torblatt oder dergleichen Gebäudeverschluß, vorzugbeispielsweise über Kopf bewegbares Torblatt eines Einblatt- oder Sektionaltores, anschließbar ist, mit einem, bevorzugt elektromotorischen, Antriebsaggregat, bestehend aus einem Antriebsmotor mit Übersetzungsgetriebe und Antriebskopf, letzterer insbesondere in Gestalt eines Reibradgliedes, und mit einem von diesem angetriebenen, an den Mitnehmerschlitten anzuschließenden Antriebsstrang, bevorzugt in Form eines flexiblen Gurtes, insbesonders eines Textilbandes, der um eine an der dem Antriebsaggregat abgewandten Ende der Führungsschiene anzuordnende Umlenkeinrichtung vorzugsweise eine Umlenkrolle, geführt ist.

Man ist bestrebt, Antriebe der vorstehenden Art möglichst raumsparend zu lagern und/oder zu transportieren und sie am Aufnahmeort möglichst einfach zu komlettieren, was insbesondere bedeutet, daß man die entsprechend der zurückzulegenden Antriebswegstrecke lang bemessene Führungsschiene erst am Betriebsort anschließt. Dies soll natürlich möglichst einfach und narrensicher geschehen, weshalb der für Lagerung und Transport mit geringem Raumaufwand vorbereitet ausgestattete Antrieb soweit wie möglich vormontiert ist.

Die meisten Antriebsstränge, so nach altbekannter Art Ketten, aber auch seilförmige Antriebe sind gegen Verdrehungen um ihre Längsachse "empfindlich", was bei Ketten ohne weiteres verständlich ist und bei Seilen zumindest zu Längenänderungen führen kann. Ähnlich wie bei Ketten als Antriebsstrang sind auch gurtbzw. bandförmige Antriebsstränge gegen Verdrehungen empfindlich bzw. setzen für einen ordnungsgemäßen, dauerhaften Betrieb den flachen Verlauf der Strangtrume voraus.

Der Erfindung liegt die Aufgabe zugrunde, eine Antriebseinrichtung der eingangs genannten Art zur Verfügung zu stellen, die eine raumsparende Lagerungsund/oder Transportausbildung erlaubt und zugleich eine ordnungsgemäße Endmontage nach Anschluß der Führungsschiene bzw. von Führungsschienenstücken erlaubt, ohne daß im Zuge der Montage die Gefahr eines fehlerhaften Antriebsstrangverlaufes auftreten kann.

Ausgehend von einem Antriebsgerät mit den eingangs genannten Merkmalen wird diese Aufgabe erfindungsgemäß dadurch gelöst, daß das Antriebsaggregat bzw. dessen Abtriebskopf einen Speicherabschnitt aufweist, in welchen der über den Antriebskopf geführte, für die gesamte Führungsschienenlänge bemessene Antriebsstrang in Längsrichtung durch wellenförmige Faltung verkürzt nebst der Umlenkeinrichtung über die der Antriebsstrang ebenfalls geführt ist, für die Lagerhaltung und/oder den Transport auf kleinem Raum aufgenommen ist, an welchen Speicherabschnitt die einteilige oder in Längsrichtung aufeinanderfolgend aus mehreren Teilstücken bestehende Führungsschiene am Einbauort anschließbar ist, in der die Umlenkeinrichtung unter verdrehfreier Mitnahme des sich dabei in Führungsschienenlängsrichtung streckenden Antriebsstranges bis zum dem Antriebsaggregat abgewandten Ende der Führungsschiene in die Betriebsstellung verschiebbar und dort festlegbar ist.

Die erfindungsgemäße Antriebseinrichtung zeichnet sich demnach dadurch aus, daß ein dem Antriebsaggregat bzw. dessen Abtriebskopf - wenn die eigentliche Antriebsmotor- und ggfs. Übersetzungseinheit nicht für den Lager- und/oder Transportzustand vormontiert ist - zugeordneter Speicherabschnitt den Antriebsstrang hinsichtlich seiner Betriebslängserstreckung verkürzt, bspw. zickzack- oder wellenförmig gefaltet, mäanderformig verlaufend oder dgl. auf entsprechend kleinem Raume bevorratet ist, und zwar vormontiert einmal am Antriebskopf und zum anderen an einer Umlenkeinrichtung, die im betriebsbereiten Zustand an dem dem Antriebsaggregat abgewandten Ende der dann an den Speicherabschnitt angeschlossenen Führungsschiene anzuordnen ist. Dabei kann der Speicherabschnitt grundsätzlich beliebiger Formgebung sein, in besonders bevorzugter Ausführung bildet er jedoch einen antriebsaggregatseitigen Anfangsbereich der Führungsschiene, die nach Anschluß eines entsprechend langen Teilstückes, auch zusammensetzbar aus mehreren kürzeren Teilstücken, am Einsatzort und den dortigen Erfordernissen genügend insgesamt zur Verfügung steht. Insbesondere in dieser letzteren Ausbildung kann ein Mitnehmerschlitten, der an den Antriebsstrang angeschlossen und von diesem hin- und hergehend bewegt wird, ebenfalls vormontiert, also bereits im Lagerungs- und/oder Transportzustand, an dem Speicherabschnitt angeordnet sein. Der Schlitten bewegt sich dann während des Betriebes über die Anschlußstelle zwischen Speicher und benachbartem Führungsschienenstück hinweg.

Aufgrund der vorstehenden Ausbildung läßt sich die weitestgehend vorgefertigte Antriebseinheit nach Anschluß einer ein- oder mehrstückigen Führungsschiene am Einbauort und der dort benötigten Schienenlänge einfach dadurch in den betriebsbereiten Zustand überführen, daß die Umlenkeinrichtung unter Mitnahme des an ihr angreifenden, in der Speichereinrichtung verkürzt aufgenommenen Antriebsstranges aus dem Speicherabschnitt heraus über die Arbeitslänge der Führungsschiene hinweg unter Strecken des Stranges geschoben und in der antriebsfernen Endposition der Führungsschiene festgelegt wird. Dabei kann die Umlenkeinrichtung - insbesondere in Gestalt einer Umlenkrolle - mit Achslagerhalterungen versehen sein, die der Befestigung im Führungsschienenendbereich dienen und auch bereits für den Transport im Speicherabschnitt befestigt sein können. Es genügt dann lediglich das Lösen im Speicherabschnitt und das Festlegen im Führungsschienenendabschnitt nach entsprechender Verschiebung der Umlenkeinrichtung aus dem Abschnitt heraus über die Schienenlänge hinweg.

Aufgrund der verkürzten Aufnahme des Antriebsstranges, insbesondere gurt- oder bandförmig, in wellenförmigem Verlauf oder dgl. steht der Antriebsstrang im Speicherabschnitt unverdreht zur Verfügung und nimmt nach Verschieben der Umlenkeinrichtung in die Betriebsstellung selbsttätig seine richtige unverdrehte Betriebslage ein, wobei insoweit vorausgesetzt ist, daß die Umlenkeinrichtung während der Verschiebung in die Führungsschiene nicht um eine senkrecht zu ihrer Achsrichtung und in Längsrichtung der Schiene verlaufende Richtungslinie verdrehbar ist.

Die erfindungsgemäße Ausbildung der Antriebseinrichtung eignet sich grundsätzlich für alle möglichen Antriebsaggregate, die mit gegen verdrehen empfindlichen Antriebssträngen arbeiten, insbesondere aber für solche, die mit einem gurt- oder bandförmigen Antriebsstrang arbeiten. Diese Antriebsaggregate besitzen einen Antriebskopf mit unter Reibschluß an dem Antriebsstrang angreifender Rolleneinrichtung.

Die Erfindung wird anhand der in der Zeichnung wiedergegebenen Ausführungsbeispiele nachstehend näher erläutert. Es zeigen
- Figur 1: eine schematische, aufgeschnittene Seitenansicht einer Speichereinrichtung mit daneben angedeutetem, am Einbauort anzuschließenden Schienenstück;
- Figur 2: eine weitere schematisch wiedergegebene, aufgeschnittene Ausführung eines modifizierten Speicherabschnittes.

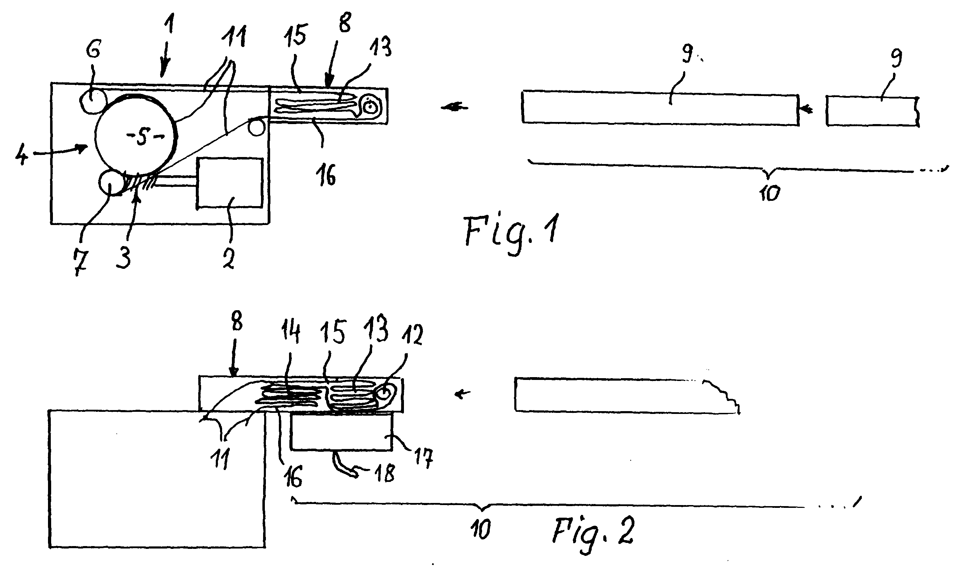

Figur 1 gibt ein insgesamt mit 1 bezeichnetes Antriebsaggregat wieder, welches einen Elektromotor 2, ein als Schneckenradgetriebe ausgebildetes Übersetzungsgetriebe 3 und einen insgesamt mit 4 bezeichneten Abtriebskopf umfaßt, welch letzterer eine Reibrolle 5 und zwei Lenkelemente 6 und 7 umfaßt, so daß der insgesamt mit 11 bezeichnete Antriebsstrang mittels der Lenkelemente 6 und 7 über einen großen Umfangsbereich (deutlich größer 180°) der Reibrolle 5 geführt ist. Vom Abtriebskopf 4 verläuft der Antriebsstrang 11 in einem in Führungsschienenrichtung vorstehenden Speicherabschnitt 8, an welchen am Ort des Einbaues eine insgesamt mit 10 bezeichnete Führungsschiene - hier angedeutet durch eines von mehreren kurzen Schienenstücken 9 anschließbar ist. Der endlosschlaufenförmige Antriebsstrang ist in einem vom Abtriebskopf 4 abgewandten Endbereich des Speicherabschnittes 8 angeordnete Umlenkeinrichtung 12 geführt.

Wenn am Einbauort die Führungsschiene 10 - ggfs. unter Verwendung kurzer Schienenstücke, die aufeinanderfolgend aneinander anschließbar sind, bspw. durch muffenförmige Übergriffe, wird die Umlenkeinrichtung 12 unter streckender Mitnahme des Antriebsstranges 11 aus dem Speicherabschnitt 8 heraus in den Endbereich der Führungsschiene 10 verschoben, und zwar im wesentlichen ohne Veränderung der Relativlage der Achse der Umlenkeinrichtung zur Führungsschienenlängsrichtung, so daß die Umlenkeinrichtung sicher mit in gewendelter verkürzter Speicherform im Speicherabschnitt vormontierter Lage des Antriebsstranges in die Betriebsstellung gelangt und damit selbsttätig die richtige Lage des Antriebsstranges auch in gestreckter Betriebsstellung sichergestellt ist.

In Figur 1 ist die Formgebung des Speicherabschnittes 8 offengelassen, es muß lediglich ein Anschluß der Führungsschiene derart möglich sein, daß die Umlenkeinrichtung ohne Störung der vorgeschilderten Relativlage in den dem Antriebsaggregat 1 abgewandten Endbereich der Führungsschiene 10 überführbar ist. Dabei kann ein Mitnehmerschlitten, an den der zu bewegende Gegenstand anschließbar ist und der mit dem Gurt fest in Verbindung steht, ebenfalls an dem Speicherabschnitt vorbereitend gehalten sein.

In Figur 2 weist der Speicherabschnitt praktisch dasselbe Profil wie die anzuschließende Führungsschiene auf und bildet einen Anfangsteil der am Einbauort insgesamt benötigten Schienenlänge. Dadurch ist es möglich, den Mitnehmerschlitten 17 nebst Verbindungsteil 18 zum nicht dargestellten, zu bewegenden Gegenstand, bspw. Torblatt, bereits in seiner Anfangsstellung an dem Speicherabschnitt 8 vorzusehen, so daß nach Anschluß des am Einbauort noch benötigten Führungsschienenabschnittes die insgesamt mit 10 bezeichnete Führungsschiene aus Speicherabschnitt 8 und Führungsschienenabschnitt für die Bewegung des Mitnehmerschlittens über die Anschlußstelle hinweg zur Verfügung steht.

Beim Ausführungsbeispiel gemäß Figur 1 wurde nur eines der Trume, nämlich 15, des Antriebsstranges 11 durch Faltung 13 verkürzt gespeichert, und zwar wie gezeichnet hinsichtlich des Wellenverlaufs etwa senkrecht zur Längsrichtung der Führungsschiene. Es ist ohne weiteres verständlich, daß ein solcher Wellenverlauf auch anders, bspw. um 90° gedreht, also mit fortschreitendem Wellenverlauf in Längsrichtung der Führungsschiene weisend ausgeführt werden kann. Beim Ausführungsbeispiel gemäß Figur 2 sind beide Trume 15 und 16 des Antriebsstranges 11 durch Faltung verkürzt, wie bei 13 und 14 wiedergegeben.

Durch die in Figur 1 angedeutete Ausbildung des Antriebsaggregates, insbesondere auch der Schneckenantrieb aus Schneckenausbildung im Abtriebsbereich der Motorwelle und Schneckenradausbildung koaxial und verdrehfest zur Reibrolle 5 erhält man insgesamt eine sehr gedrungene Ausbildung des Antriebsaggregates mit Speicherabschnitt, so daß Lagerhaltung und/oder Transport entsprechend erleichtert ist bzw. sind.

## Patentansprüche

1. Antriebseinrichtung für einen über eine, vorzugsweise geradlinig verlaufende, Wegstrecke entlang einer Führungsschiene (10) hin- und hergehend bewegt antreibbaren Mitnehmerschlitten (17) oder dergleichen, der an einem hin- und hergehend anzutreibenden Gegenstand, insbesondere Torblatt oder dergleichen Gebäudeverschluß, vorzugsweise über Kopf bewegbares Torblatt eines Einblatt- oder Sektionaltores, anschließbar ist, mit einem, bevorzugt elektromotorischen, Antriebsaggregat (1), bestehend aus einem Antriebsmotor (2) mit Übersetzungsgetriebe (3) und Antriebskopf (4), letzterer insbesondere in Gestalt eines Reibradgliedes (5), und mit einem von diesem angetriebenen, an den Mitnehmerschlitten (17) anzuschließenden Antriebsstrang (11), bevorzugt in Form eines flexiblen Gurtes, insbesonders eines Textilbandes, der um eine an der dem Antriebsaggregat (1) abgewandten Ende der Führungsschiene (10) anzuordnende Umlenkeinrichtung (12) vorzugsweise eine Umlenkrolle, geführt ist,
**dadurch gekennzeichnet,**
daß das Antriebsaggregat (1) bzw. dessen Abtriebskopf (4) einen Speicherabschnitt (8) aufweist, in welchen der über den Antriebskopf (4) geführte, für die gesamte Führungsschienenlänge bemessene Antriebsstrang (11) in Längsrichtung durch wellenförmige Faltung (13, 14) verkürzt nebst der Umlenkeinrichtung (12) über die der Antriebsstrang (11) ebenfalls geführt ist, für die Lagerhaltung und/oder den Transport auf kleinem Raum aufgenommen ist, an welchen Speicherabschnitt (8) die einteilige oder in Längsrichtung aufeinanderfolgend aus mehreren Teilstücken (9) bestehende Führungsschiene (10) am Einbauort anschließbar ist, in der die Umlenkeinrichtung (12) unter verdrehfreier Mitnahme des sich dabei in Führungsschienenlängsrichtung streckenden Antriebsstranges (11) bis zum dem Antriebsaggregat (1) abgewandten Ende der Führungsschiene (10) in die Betriebsstellung verschiebbar und dort festlegbar ist.

2. Antriebseinrichtung nach Anspruch 1,
**dadurch gekennzeichnet,**
daß der Speicherabschnitt (8) als Anfangsbereich der anzuschließenden Führungsschiene (9; 10) in Anpassung an deren Schlittenführungs- und Antriebsstrangaufnahmeprofil ausgebildet ist und in der Lagerhaltungs- und/oder Transportausbildung im Bereich des Speicherabschnittes (8) den Mitnehmerschlitten (17) aufnimmt.

3. Antriebseinrichtung nach Anspruch 2,
**dadurch gekennzeichnet,**
daß der Mitnehmerschlitten (17) nach Anschluß der insoweit übrigen Führungsschiene (9; 10) in der so hergestellten Betriebsausbildung über die Anschlußstelle hin- und hergehend bewegbar ist, so daß der Speicherabschnitt (8) ein Teilstück der im Betriebszustand insgesamt nutzbaren Führungsschienenlänge bildet.

4. Antriebseinrichtung nach einem der Ansprüche 1 bis 3,
**dadurch gekennzeichnet,**
daß bei Rückführung des vom Antriebsaggregat (1) zur Umlenkeinrichtung (12) verlaufenden Antriebsstranges (11), insbesondere in Endlos-Schlaufenform ausgebildet, beide Strangtrume (15, 16) im Speicherzustand in einer wellenförmigen Faltung (13, 14) in Längsrichtung der Führungsschiene (10) entsprechend verkürzt gehalten sind.

5. Antriebseinrichtung nach einem der Ansprüche 1 bis 4,
**dadurch gekennzeichnet,**
daß die Faltung (13, 14) des Antriebsstranges (11) im Speicherzustand der Wellenstegrichtung nach unterschiedlich, insbesondere senkrecht zur oder in Schienenlängsrichtung, gegebenenfalls gemischt, vorgesehen ist.

6. Antriebseinrichtung nach einem der Ansprüche 1 bis 5,
**dadurch gekennzeichnet,**
daß der Antriebskopf (4) des Antriebsaggregates (1) eine Reibrolle (5) und zwei Lenkelemente (6, 7) aufweist, von denen wenigstens eines in Ausgangsrichtung des zugehörigen Antriebsstrangtrumes (15 bzw. 16) ausgerichtet ist.

7. Antriebseinrichtung nach einem der Ansprüche 1 bis 6,
**dadurch gekennzeichnet,**
daß das Antriebsaggregat (1) einen Elektromotor (2) und einen Schneckenantrieb (3) aufweist, dessen Schneckenrad koaxial zur Reibrolle (5) und verdrehfest zu dieser angeordnet ist.

8. Antriebseinrichtung nach einem der Ansprüche 1 bis 7,
**dadurch gekennzeichnet,**
daß der Antriebsstrang (11) in seinem Anschlußbereich an dem Mitnehmerschlitten (17) hinsichtlich der Stranglänge seiner Endlos-Schlaufenausbildung variabel und angepaßt an die Führungschienenlänge festlegbar ist.

## Claims

1. Drive mechanism for a powered camming slider (17), or similar, which is moved backwards and forwards along a guide rail (10), preferably running in a straight line, which can be connected to an object which is to be moved backwards and forwards, especially a door section or a similar building access, preferably an up-and-over door section of a single-section or a multi-section door, with a drive unit, preferably electric (1), consisting of a drive motor (2) with a transmission system (3) and a drive head (4), the latter especially in the form of a frictional wheel unit (5), and with a drive cord (11) operated by this drive unit, which is to be connected to the camming slider, the drive cord preferably being in the form of a flexible belt, especially a textile belt, which is fed around a guide assembly (12), preferably a guide pulley, at the end of the guide rail (10) facing away from the drive unit, characterised in that the drive unit (1), or its drive head (4), has a storage section (8), in which the drive cord (11), fed via the drive head (4) and measured for the entire guide rail length, is shortened in a longitudinal direction by being gathered in a wave form (13, 14), near the guide assembly (12) via which the drive cord also runs, for storing and/or movement in a small space, to which storage section (8) the guide rails (10), either one-piece or comprised from a longitudinal succession of pieces (9), can be connected on site, in which the guide assembly (12), under distortion-free drive of the drive cord (11), which extends in the direction of the guide rail up to the end of the guide rail (10) facing away from the drive unit (1), is moveable into its operating location where it can be located in position.

2. Drive assembly according to claim 1, characterised in that the storage section (8) is constructed to be the starting area of the guide rail which is to be connected (9, 10) in conformity with the profile for the slider guide and drive cord and accommodates the camming slider (17) in the region of the storage section (8) in storage and/or transportation mode.

3. Drive assembly according to claim 2, characterised in that the camming slider (17) is moveable backwards and forwards over the connection point after connection of the, in this respect, remaining guide rails (9, 10) in the operating mode which has been thus created, so that the storage section (8) forms a part of the total useable guide rail length when in operating condition.

4. Drive assembly according to one of claims 1 to 3, characterised in that when the drive cord (11) between the drive unit (1) and the guide assembly (12) is recoiled, especially in the form of an endless loop, both sides of the drive cord (15, 16) are held in a stored mode and correspondingly shortened by being folded in a wave form (13, 14) along the length of the guide rail (10).

5. Drive assembly according to one of claims 1 to 4, characterised in that the folding (13, 14) of the drive cord (11) in its stored state, is designed to be different to the wave web direction, and to be especially perpendicular to or along the length of the rail, possibly mixed.

6. Drive assembly according to one of claims 1 to 5, characterised in that the drive head (4) of the drive unit (1) has a friction roller (5) and two controller elements (6, 7), of which at least one is mounted in the output direction of the appropriate side (15 or 16) of the drive cord.

7. Drive assembly according to one of claims 1 to 6, characterised in that the drive unit (1) has an electric motor (2) and a worm drive (3), of which the worm wheel is coaxially mounted with the friction roller (5) and is secured against twisting.

8. Drive assembly according to one of claims 1 to 7, characterised in that the drive cord (11) can be located in position, variably and in accordance with the length of the guide rail, where it is connected to the camming slider (17), with regard to the length of its endlessloop construction.

## Revendications

1. Système d'entraînement pour un chariot entraîneur (17) ou analogue à déplacer selon un mouvement de va-et-vient le long d'un rail de guidage (10) sur une trajectoire qui s'étend de préférence en ligne droite, chariot entraîneur (17) qui peut être raccordé à un objet à entraîner selon un mouvement de va-et-vient, en particulier à un vantail de porte ou à une fermeture de ce type d'un bâtiment, de préférence au moyen d'un vantail de porte mobile en tête d'une porte à un seul vantail ou d'une porte sectionnée, avec un sous-ensemble d'entraînement (1) mû de préférence par un moteur électrique consistant en un moteur d'entraînement (2) avec une transmission démultipliée (3) et une tête d'entraînement (4), cette dernière étant en particulier sous la forme d'un élément à friction (5), et avec une ligne d'entraînement (11) entraînée par celui-ci, à raccorder au chariot entraîneur (17), de préférence sous la forme d'une courroie flexible, en particulier d'une bande textile que l'on fait passer autour d'un dispositif de renvoi (12) de préférence d'une poulie de renvoi, à disposer sur l'extrémité située à l'opposé du sous-ensemble d'entraînement (1) du rail de guidage (10),
caractérisé en ce que
le sous-ensemble d'entraînement (1) ou sa tête de sortie (4) présente une section d'accumulation (8) dans laquelle la ligne d'entraînement (11) que l'on fait passer sur la tête d'entraînement (4) et qui est dimensionnée pour toute la longueur du rail de guidage, est logée dans le sens longitudinal en étant raccourcie par des plis (13, 14) en forme d'ondulations, outre le dispositif de renvoi (12) sur lequel on fait passer également la ligne d'entraînement (11), pour le stockage et/ou le transport dans un petit volume en pouvant raccorder, sur le lieu de montage, à ladite section d'accumulation (8), le rail de guidage (10) en une seule pièce ou consistant en plusieurs morceaux partiels (9) se succédant dans le sens longitudinal, dans lequel on peut faire coulisser et fixer en position de fonctionnement à cet endroit le dispositif de renvoi (12) en entraînant sans rotation la ligne d'entraînement (11) qui s'étend dans ce cas dans le sens longitudinal du rail de guidage jusqu'à l'extrémité située à l'opposé du sous-ensemble d'entraînement (1) du rail de guidage (10).

2. Dispositif d'entraînement selon la revendication 1,
caractérisé en ce que
la section d'accumulation (8) est constituée comme zone initiale du rail de guidage à raccorder (9, 10) en s'adaptant au profil de guidage de son chariot et au profil de recueil de la ligne d'entraînement, et reçoit le chariot entraîneur (17) dans la configuration de stockage et/ou de transport dans la zone de la section d'accumulation (8).

3. Dispositif d'entraînement selon la revendication 2,
caractérisé en ce que
le chariot entraîneur (17) peut être déplacé selon un mouvement de va-et-vient, après le raccordement du reste du rail de guidage (9, 10) dans la configuration de fonctionnement ainsi réalisée, sur le point de raccordement, de telle sorte que la section d'accumulation (8) forme un morceau partiel de la longueur de rail de guidage au total utilisable en position de fonctionnement.

4. Dispositif d'entraînement selon l'une des revendications 1 à 3,
caractérisé en ce que
lors du retour de la ligne d'entraînement (11) s'étendant du sous-ensemble d'entraînement (1) jusqu'au dispositif de renvoi (12), en particulier sous la forme d'une boucle sans fin, les deux brins de la ligne (15, 16) sont maintenus raccourcis de façon correspondante en position d'accumulation, grâce à un pliage (13, 14) en forme d'ondulation dans le sens longitudinal du rail de guidage (10).

5. Dispositif d'entraînement selon l'une des revendications 1 à 4,
caractérisé en ce que
le pliage (13, 14) de la ligne d'entraînement (11) en position d'accumulation du système d'ondulations est prévu de plusieurs façons différentes, en particulier perpendiculairement au sens longitudinal du rail ou dans ce sens, le cas échéant de façon mixte.

6. Dispositif d'entraînement selon l'une des revendications 1 à 5,
caractérisé en ce que
la tête d'entraînement (4) du sous-ensemble d'entraînement (1) présente un galet à friction (5) et deux éléments directeurs (6, 7) dont l'un au moins est orienté dans le sens de sortie du brin correspondant de la ligne d'entraînement (15 ou 16).

7. Dispositif d'entraînement selon l'une des revendications 1 à 6,
caractérisé en ce que
le sous-ensemble d'entraînement (1) présente un moteur électrique (2) et un entraînement à vis sans fin (3) dont la roue tangente est disposée de façon coaxiale au galet à friction (5) et est disposée de façon solidaire en rotation sur celui-ci.

8. Dispositif d'entraînement selon l'une des revendications 1 à 7,
caractérisé en ce que
la ligne d'entraînement (11) peut être variable dans sa zone de raccordement sur le chariot entraîneur (17) en ce qui concerne la longueur de sa configuration en forme de boucle sans fin, et peut être fixée en l'adaptant à la longueur du rail de guidage.
